# EUROPEAN PATENT SPECIFICATION

(11) **EP 1 591 690 B1**
(45) Date of publication and mention of the grant of the patent: **04.10.2017**
(21) Application number: 04702835.2
(22) Date of filing: 16.01.2004
(51) Int. Cl.: F16F 9/32

(54) **HYDRAULIC SHOCK ABSORBER FOR MOTOR VEHICLE**
HYDRAULISCHER STOSSDÄMPFER FÜR KRAFTFAHRZEUG
AMORTISSEUR HYDRAULIQUE POUR VEHICULE AUTOMOBILE

(30) Priority: 17.01.2003 JP 2003009158
(43) Date of publication of application: 02.11.2005
(73) Proprietor: Yamaha Hatsudoki Kabushiki Kaisha, Iwata-shi, Shizuoka 438-8501 (JP)
(72) Inventor: SATOU, Masahiro, YAMAHA HATSUDOKI KABUSHIKI KAISHA, Iwata-shi, Shizuoka 4388501 (JP); KONDOU, Katsuhiro, YAMAHA HATSUDOKI KABUSHIKI KAISHA, Iwata-shi, Shizuoka 4388501 (JP); SAWAI, Seiji, YAMAHA HATSUDOKI KABUSHIKI KAISHA, Iwata-shi, Shizuoka 4388501 (JP)
(74) Representative: Grünecker Patent- und Rechtsanwälte PartG mbB
(86) International application number: PCT/JP2004/000316
(87) International publication number: WO 2004/065817

(56) References cited:
- FR-A- 1 125 470
- JP-A- 7 238 968
- JP-U- 1 176 507
- JP-U- 4 106 536
- JP-U- 57 109 343
- JP-U- 58 000 020
- US-A- 5 595 270
- US-A- 5 595 270
- US-B1- 6 401 886

## Description

The present invention relates to a hydraulic shock absorber according to the preamble **of independent claim** 1.

**Prior art document** US 5,595,270 **discloses such a vibration damper, in particular a single-tube vibration damper, comprising a cylinder which is closed on the end by a piston rod guide which centers an axially movable piston rod with a piston. The piston with its damping valves divides the cylinder into an upper and a lower work chamber. A decompression stop in the form of a compression spring with a round wire cross section is located in the upper working chamber. The compression spring is designed in multiple stages, whereby a first longitudinal segment of the spring interferes with the cylinder and is held in the cylinder by means of this interference fit, and an additional longitudinal segment forms a guide with respect to the piston rod. A support disk is used as a stop for the control of decompression stop, i.e. compression spring as a function of stroke length. Said support disk is arranged between the lower work chamber and a further gas chamber arranged within the cylinder.**

In the conventional type of the hydraulic shock absorber for a vehicle, a piston is fitted in a cylinder, and a piston rod coupled to the piston projects from one end of the cylinder. The hydraulic shock absorber for a vehicle is connected to the wheel side and the vehicle body side at the other end of the cylinder and the projecting end of the piston rod through a cushion rubber (see JP-A-Hei 5-60166, for example).

The piston is formed with a communication passage for communication between two fluid chambers defined in the cylinder by the piston. The piston is also formed with an aperture for generating damping force when hydraulic fluid flows through the communication passage. In other words, damping force is generated when the hydraulic shock absorber for a vehicle is expanded or contracted and the hydraulic fluid flows from one fluid chamber to the other through the communication passage.

In the thus constructed hydraulic shock absorber, one fluid chamber in which the piston rod is inserted, of the two defined in the cylinder, experiences a smaller amount of volume change than that experienced by the other, by the increased or decreased volume of the piston rod. In order to cancel out the difference in the amount of volume change in this type of hydraulic shock absorber, a wall of the other fluid chamber (the wall opposing the piston) is constituted of a free piston. In addition to that, the hydraulic shock absorber is constructed such that the free piston is urged by high-pressure gas from the opposite side of the fluid chamber (see JP-A-2001-317582, for example).

On the other hand, the conventional hydraulic shock absorber for a vehicle is mounted with a shock absorbing elastic member between the cylinder where the piston rod penetrates and the piston, as disclosed for example in JP-U-Hei 5-22885 and JP-A-Hei 10-141421. This is for the purpose of preventing the piston from colliding with the cylinder in the most expanded state (in the fully expanded state). The elastic member is formed of rubber, a compression coil spring, or the like. The elastic member is kept uncompressed with its one end free with the piston in the normal use range, and compressed as clamped between a stopper on the piston side and the cylinder in the most expanded state.

In the conventional hydraulic shock absorber constructed as described above, however, the pressure of the high-pressure gas is applied to the hydraulic fluid in the cylinder through the free piston, which causes the piston to be pushed in the direction that the piston rod projects out of the cylinder. The reason for this is as follows. One end surface of the piston opposing the free piston receives the pressure over the entire surface. On the other hand, the other end surface of the piston on the piston rod side receives the pressure over a smaller area than the one end surface by the cross sectional area of the piston rod.

Since the piston is pushed toward the piston rod side to thereby expand the hydraulic shock absorber, the cushion rubber interposed between both ends of the hydraulic shock absorber and the vehicle body and wheel sides is compressed at all times.

Therefore, the intended shock absorbing function of the cushion rubber is impaired, and shock which occurs when, for example, the wheel goes over minute bumps on the road surface such as a **white** line can be easily transmitted to the vehicle body side through the cushion rubber and the hydraulic shock absorber. In other words, vehicles installed with the conventional shock absorber have their own limitations in terms of improvement of the riding comfort.

The present invention has been made to solve such problems, and therefore has an object to provide a hydraulic shock absorber in which the shock absorbing function of a cushion rubber interposed between both ends of the hydraulic shock absorber and the vehicle body and wheel sides is not impaired.

This objective is solved by a hydraulic shock absorber according to claim 1. Thus, to achieve this object, a spring is disposed in the cylinder for urging the piston in the direction that a piston rod is inserted into the cylinder with the piston in the normal use range.

Accordingly, the pushing force generated by the difference in pressure receiving area between one and the other end surfaces of the piston is canceled out by the elastic reaction force of the spring is disposed in the cylinder. Thus, the force compressing the cushion rubber interposed between the hydraulic shock absorber and the vehicle body side is reduced.

Preferably, there is provided a hydraulic shock absorber for a vehicle, in which the spring is disposed in the cylinder for urging the piston in the direction that a piston rod is inserted into the cylinder with the piston in the normal use range, the spring is made up of a first coil spring located on the radially inner side and a second coil spring located on the radially outer side, and the first and second coil springs are formed to have different winding directions from each other.

Accordingly, the pushing force generated by the difference in pressure receiving area between one and the other end surfaces of the piston is canceled out by the elastic reaction force of the first and second compression coil springs. Thus, the force compressing the cushion rubber interposed between both ends of the hydraulic shock absorber and the vehicle body and wheel sides is reduced. Since the first and second compression coil springs are formed to have different winding directions from each other, they are not caught in each other and their expansion and contraction is not impeded thereby.

Further, preferably the hydraulic shock absorber in which the spring for urging the piston in the direction that the piston rod is received into the cylinder is constructed such that its elastic reaction force under the standard vehicle height state with a passenger on board is generally equal to pushing force generated by the difference in pressure receiving area between one and the other end surfaces of the piston.

Accordingly, generally all the pushing force can be balanced out under the standard vehicle height state.

Further preferred embodiments are laid down in the further dependent claims.

In the following, the present invention is explained in further detail with respect to several embodiments thereof in conjunction with the accompanying drawings, wherein:
- FIG. 1: shows sectional views of a first embodiment of a hydraulic shock absorber for a vehicle;
- FIG. 2: is an enlarged sectional view showing a piston and a cylinder where a piston rod penetrates;
- FIG. 3: is a sectional view showing the region where the piston rod is connected to the vehicle body side;
- FIG. 4: is a graph showing the relationship between the stroke of the hydraulic shock absorber and the pushing force and elastic reaction force;
- FIG. 5: shows sectional views of a second embodiment of a hydraulic shock absorber for a vehicle;
- FIG. 6: is an enlarged sectional view showing a piston and a cylinder where a piston rod penetrates; and
- FIG. 7: is a graph showing the relationship between the stroke of the hydraulic shock absorber and the pushing force and elastic reaction force.

### (First Embodiment)

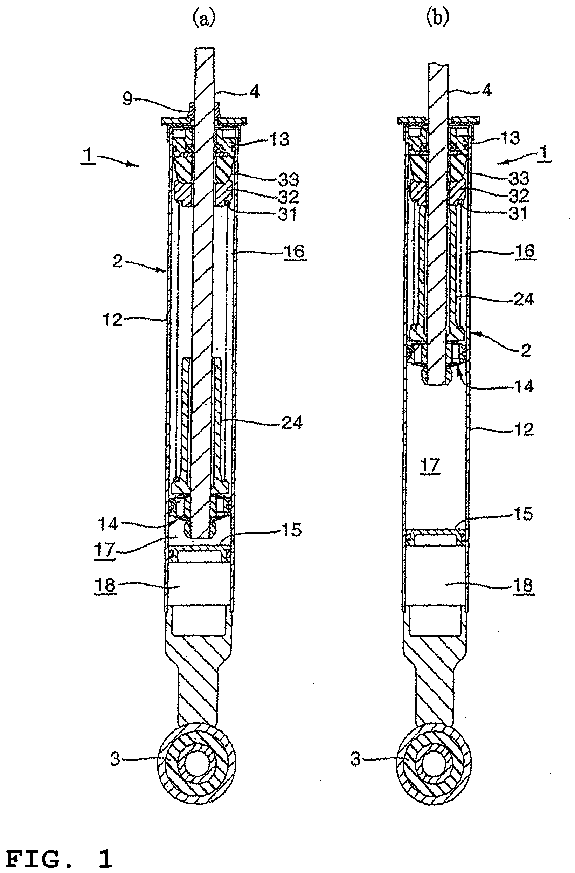

An embodiment of a hydraulic shock absorber for a vehicle is hereinafter described in detail with reference to FIGs. 1 through 4.

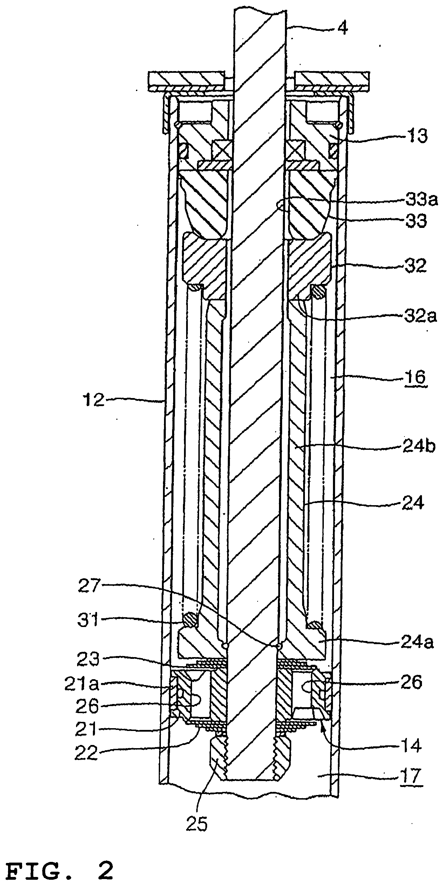

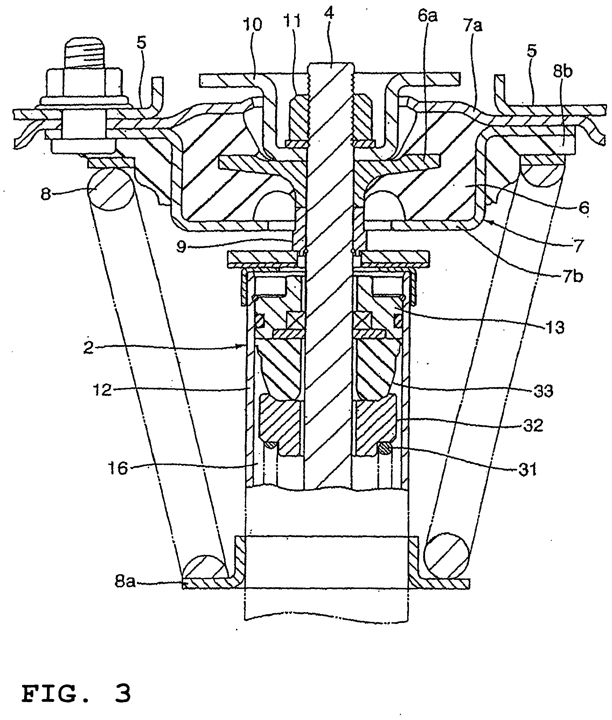

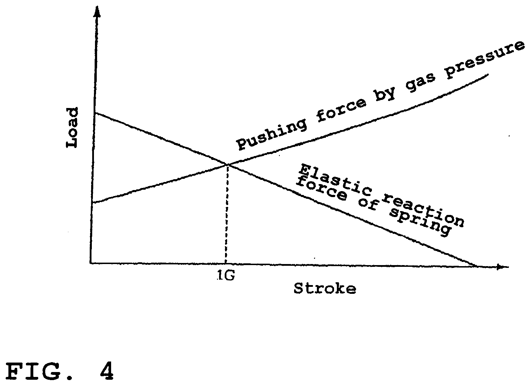

FIG. 1 shows sectional views of the hydraulic shock absorber for a vehicle of this embodiment, in which FIG. 1 (a) shows the most contracted state, and FIG. 1 (b) shows the most expanded state. FIG. 2 is an enlarged sectional view showing a piston and a cylinder where a piston rod penetrates. FIG. 3 is a sectional view showing the region where the piston rod is connected to the vehicle body side. FIG. 4 is a graph showing the relationship between the stroke of the hydraulic shock absorber and the pushing force and elastic reaction force.

In the drawings, reference numeral 1 denotes a hydraulic shock absorber for an automobile according to this embodiment. The hydraulic shock absorber 1 is interposed between the vehicle body side and the wheel side. Specifically, in the hydraulic shock absorber 1, the lower end of a cylinder 2 is coupled to a wheel side member (not shown) through a cushion rubber 3. Also, in the hydraulic shock absorber 1, as shown in FIG 3, the upper end of a piston rod 4 projecting upward from the cylinder 2 is coupled to a frame member 5 of the vehicle body through a cushion rubber 6 (see FIG. 3).

As shown in FIG. 3, the upper end of the piston rod 4 is coupled to the frame member 5 of the vehicle body through an upper support 7. The upper support 7 also holds the upper end of a suspension compression coil spring 8, in addition to the piston rod 4, to attach the suspension compression coil spring 8 to the frame member 5. The upper support 7 is constructed such that the cushion rubber 6 is filled into an annular hollow space formed between an upper plate 7a and a lower plate 7b to be hardened there. The upper support 7 is mounted with a pressure receiving plate 6a, through the cushion rubber 6, for connection to the piston rod. The pressure receiving plate 6a is formed at its center by drilling with a through hole for receiving the piston rod 4. The pressure receiving plate 6a is elastically supported between the upper plate 7a and the lower plate 7b through the cushion rubber 6.

The lower end of the suspension compression coil spring 8 is held on a cylinder body 12 of the cylinder 2 through a support bracket 8a. The upper end of the suspension compression coil spring 8 is held on the upper support 7 through a cushion rubber 8b. In other words, the elastic reaction force of the suspension compression coil spring 8 does not act on the cushion rubber 6 interposed between the piston rod 4 and the frame member 5.

The cylinder body 12 of the cylinder 2 is urged downward by the elastic reaction force of the suspension compression coil spring 8 which supports the weight of the vehicle. However, the cylinder body 12 can be displaced in vertical directions independently of the suspension compression coil spring 8, due to slight elastic deformation of the support bracket 8a. The hydraulic shock absorber 1 of this embodiment can damp shock and so on transmitted to the cylinder body 12, by the vertical displacement of the cylinder body as described above.

As shown in FIG. 3, the upper end of the piston rod 4 is fitted with a cylindrical body 9, with the cylindrical body 9 prohibited from moving downward. The upper end of the piston rod 4 projecting upward from the cylindrical body 9 is fitted from below in the through hole of the pressure receiving plate 6a. The upper end of the piston rod 4 projecting upward from the pressure receiving plate 6a is fitted with a pushing plate 10 fastened by a fixing nut 11, such that the pushing plate 10 overlaps the pressure receiving plate 6a. The upper end of the piston rod 4 is elastically supported on the frame member 5 through the cushion rubber 6 of the upper support 7 by fastening the fixing nut 11.

As shown in FIG. 1, the cylinder 2 is made up of the cylinder body 12, a cylinder cover 13, and so on. The cylinder body 12 is formed in the shape of a bottomed cylinder opening toward the upper side. The cylinder cover 13 closes the opening of the cylinder body 12 with the piston rod 4 penetrating therethrough. The cylinder cover 13 supports the piston rod 4 so as to be movable.

The inside of the cylinder body 12 is defined into an upper fluid chamber 16, a lower fluid chamber 17, and a high-pressure gas chamber 18 by a piston 14 and a free piston 15. The piston 14 is attached to the lower end of the piston rod 4. The free piston 15 is fitted in the vicinity of the lower end of the cylinder body 12. The upper fluid chamber 16 is formed between the piston 14 and the cylinder cover 13. The lower fluid chamber 17 is formed between the piston 14 and the free piston 15. The high-pressure gas chamber 18 is formed under the free piston 15. The upper fluid chamber 16 and the lower fluid chamber 17 are filled with hydraulic fluid, and the high-pressure gas chamber 18 is filled with high-pressure nitrogen gas.

The piston 14 has a structure similar to that of a piston in well-known conventional hydraulic shock absorbers. As shown in FIG. 2, the piston 14 is made up of a piston body 21, first and second plate springs 22 and 23, and so on. The piston body 21 is supported on the piston rod 4 penetrating therethrough. The first and second plate springs 22 and 23 are provided on both the upper and lower end sides of the piston body 21. The piston 14 is fixed to the piston rod 4, clamped between a support pipe 24 held on the piston rod 4 over the piston 14 and a nut 25 threaded on the lower end of the piston rod 4.

The piston body 21 is mounted with a seal member 21a on its outer periphery. Also, the piston body 21 is formed by drilling with plural communication holes 26 penetrating vertically. The first and second plate springs 22 and 23 are each formed in the shape of a disk. They are structured to open and close one and the other ends of the communication holes 26 by hydraulic pressure. The first and second plate springs 22 and 23 and the communication holes 26 constitute an aperture of the piston 14.

As shown in FIG. 2, the support pipe 24 is formed in the shape of a cylinder, with the piston rod 4 inserted therethrough. The lower end of the support pipe 24 is in engagement with a circlip 27 attached to the piston rod 4, so as to be prohibited from moving upward with respect to the piston rod 4. Thus, with the piston 14 attached to the piston rod 4 as described above, the support pipe 24 is fixed to the piston rod so as not to be movable in both vertical directions with respect to the piston rod 4. The lower end of the support pipe 24 is formed integrally with a flange 24a which is larger in outside diameter than a pipe portion 24b on the upper side. The support pipe 24 holds the lower end of a compression coil spring 31 described below through the flange 24a.

The compression coil spring 31 is inserted in the cylinder 2 with the support pipe 24 and the piston rod 4 penetrating therethrough. Also, the compression coil spring 31 is elastically mounted between the flange 24a and a stopper 32 located over the support pipe 24. The stopper 32 is formed in an annular shape, with the piston rod 4 fitted in a through hole in its axial center so as to be movable. The lower end of the stopper 32 is formed with a projection 32a projecting downward. The stopper 32 holds the upper end of the compression coil spring 31, with the projection 32a fitted with the upper end of the compression coil spring 31.

Between the stopper 32 and the cylinder cover 13 is interposed a rebound rubber 33. The rebound rubber 33 is formed at its center by drilling with a through hole 33a for receiving the piston rod 4 therethrough, and secured to the lower surface of the cylinder cover 13 so as to project downward.

Also, the compression coil spring 31 is formed to be so long as to urge the support pipe 24 and the stopper 32, even with the piston 14 in its lowermost position in the cylinder 2 (with the cylindrical body 9 on the upper end of the piston rod 4 prohibited by the cylinder cover 13 from moving downward) as shown in FIG. 1(a).

In the hydraulic shock absorber 1 of this embodiment, the support pipe 24 is constructed to regulate the amount of upward movement of the piston 14. This is for the purpose of ensuring that the characteristics of the compression coil spring 31, which is formed to be long as described above, do not change even when it is contracted to be excessively compressed. That is, in the hydraulic shock absorber 1, when the piston rod 4 moves upward greatly, the upper end of the support pipe 24 abuts on the stopper 32 located over it. This prohibits the piston 14 from moving upward more than a predetermined position when the hydraulic shock absorber 1 is contracted.

Specifically, the support pipe 24 is formed such that its length between the upper end and the flange 24a is generally equal to or longer than the minimum length of the compression coil spring 31 at its elastic limit, with the upper end of the support pipe 24 abutting on the lower end of the projection 32a of the stopper 32 as shown in FIGs. 1(b) and 2. The minimum length at the elastic limit refers to the length of the compression coil spring 31 when it is contracted most without any change in its characteristics.

Regarding the pressure receiving areas of the piston 14 of the thus constructed hydraulic shock absorber 1, the upper end surface of the piston 14 is smaller than the lower end surface thereof by the cross sectional area of the piston rod 4. Thus, in the hydraulic shock absorber 1, upward pushing force acts on the piston 14, with the pressure of the high-pressure gas applied to its upper and lower end surfaces through the hydraulic fluid. However, the hydraulic shock absorber 1 is provided with the compression coil spring 31 elastically mounted between the piston 14 and the cylinder cover 13. In addition, in the hydraulic shock absorber 1, the piston 14 is urged at all times in the opposite direction to the pushing force (in the direction that the piston rod 4 is inserted into the cylinder 2, or downward) by the elastic reaction force of the compression coil spring 31. Thus, the pushing force is canceled out by the elastic reaction force.

The compression coil spring 31 used in this embodiment has elastic reaction force generally equal to (which can cancel out) the pushing force under a standard vehicle height state, for example with one driver on the vehicle provided with the hydraulic shock absorber 1 and with the vehicle at a halt (including a constant speed running state where the vehicle is not accelerating, decelerating, or turning). Positions of the piston 14 under the standard vehicle height state are referred to as positions in a normal use range according to the present embodiment.

When the hydraulic shock absorber 1 is contracted, the stroke of the piston rod 4 increases which gradually reduces the elastic reaction force of the compression coil spring 31. At this time, the gas pressure in the high-pressure gas chamber 18 gradually increases. The elastic reaction force of the compression coil spring 31 is set such that the elastic reaction force reducing gradually and the pushing force by the gas pressure increasing gradually are generally equal to each other under the standard vehicle height state (indicated as 1G in FIG. 4). Thus, the hydraulic shock absorber 1 can balance out generally all the pushing force.

Therefore, the hydraulic shock absorber 1 can cancel out the pushing force and the elastic reaction force, thereby reducing the force compressing the cushion rubber 6 interposed between the hydraulic shock absorber 1 and the vehicle body side. Thus, in the hydraulic shock absorber 1, the cushion rubber 6 can effectively absorb the shock which occurs when, for example, the wheel goes over minute bumps on the road surface such as while lines.

The spring constant of the compression coil spring 31 is preferably set to about 20% that of the suspension compression coil spring 8 or lower. Setting the spring constant in this range has been found out to smoothly reduce the pushing force described above over the entire stroke range of the hydraulic shock absorber 1.

Under the standard vehicle height state described above, the load set for the compression coil spring 31 is preferably about 50% to 150% the pushing force by the high-pressure gas. This configuration can reduce the pushing force to 60% or lower at all times, compared to conventional techniques.

In the embodiment described above, the elastic reaction force of the compression coil spring 31 acts on the piston 14 even with the hydraulic shock absorber 1 in its most contracted state. However, the present embodiment may not have such limitations, but may be constructed such that the elastic reaction force acts on the piston 14 at least with the piston 14 in the normal use range, which can achieve an effect similar to that in the above embodiment.

### (Second Embodiment)

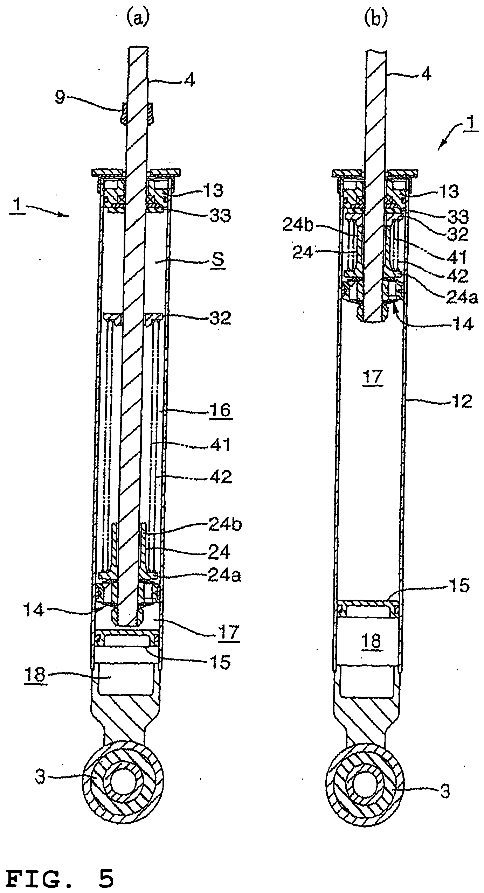

A second embodiment of a hydraulic shock absorber for a vehicle is described in detail with reference to FIGs. 5 through 7.

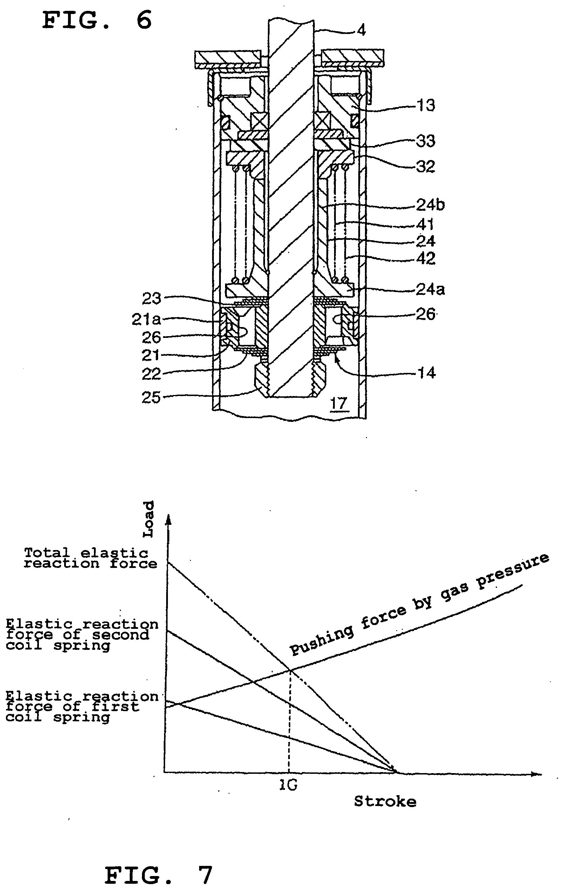

FIG. 5 shows sectional views of the hydraulic shock absorber for a vehicle according to the second embodiment, in which FIG. 5(a) shows the most contracted state, and FIG. 5(b) shows the most expanded state. FIG. 6 is an enlarged sectional view showing a piston and a cylinder where a piston rod penetrates. FIG. 7 is a graph showing the relationship between the stroke of the hydraulic shock absorber and the pushing force and elastic reaction force. In the drawings, components identical or equivalent to those described in relation to FIGs. 1 to 4 are denoted by the same reference numerals, and their detailed descriptions are not repeated as appropriate.

As shown in FIGs. 5 to 7, the hydraulic shock absorber 1 is elastically mounted with a first compression coil spring 41 and a second compression coil spring 42 disposed coaxially with the piston rod 4 in the cylinder 2. In the hydraulic shock absorber 1, the elastic reaction force of the springs 41 and 42 cancels out the pushing force by the pressure of the high-pressure gas.

The first compression coil spring 41 is located on the radially inner side so as to be relatively close to the piston rod 4. The second compression coil spring 42 is located on the radially outer side with respect to the first compression coil spring 41. The first and second compression coil springs 41 and 42 are formed to have an equal axial length (overall length) to each other. Also, the first and second compression coil springs 41 and 42 are formed to have different winding directions from each other, so as not to be caught in each other.

The overall length of the first and second compression coil springs 41 and 42 is set such that the elastic reaction force urging the stopper 32 upward is balanced out when the hydraulic shock absorber 1 is in its most contracted state. The most contracted state refers to a state where the piston 14 has deviated greatly from the normal use range and moved downward. Thus, a gap S is formed between the stopper 32 and the rebound rubber 33, with the hydraulic shock absorber 1 in its most contracted state as shown in FIG. 5(a).

With the first and second compression coil springs 41 and 42 elastically mounted in parallel with each other in the cylinder 2, the compression coil springs can have a larger spring constant compared to that in the first embodiment, without changing their overall length. In other words, in the hydraulic shock absorber 1 of this embodiment, the piston 14 is urged downward by the total elastic reaction force obtained by adding the elastic reaction forces of the first and second compression coil springs 41 and 42.

As shown in FIG. 7, the total elastic reaction force and the pushing force by the pressure of the high-pressure gas are set to be generally equal to each other under the standard vehicle height state (indicated as 1G in FIG. 7).

Therefore, the pushing force generated by the difference in pressure receiving area between one and the other end surfaces of the piston 14 is canceled out by the elastic reaction force of the first and second compression coil springs 41 and 42. Thus, the force compressing the cushion rubber interposed between both ends of the hydraulic shock absorber 1 and the vehicle body and wheel sides is reduced. Also, since the first and second compression coil springs 41 and 42 are formed to have different winding directions from each other, they are not caught in each other and their expansion and contraction is not impeded thereby.

The total elastic reaction force, or the sum of the elastic reaction forces of the first and second compression coil springs 41 and 42, is larger than the counterpart in the first embodiment. Thus, the first and second compression coil springs 41 and 42 can be utilized as a rebound elastic member for absorbing the shock which occurs when the hydraulic shock absorber 1 is in its most expanded state as shown in FIG. 5(b).

The hydraulic shock absorber 1 of this embodiment is provided with a rebound rubber 33 interposed between the stopper 32 and the cylinder cover 13. The rebound rubber 33 is for the purpose of absorbing the shock which occurs when the stopper 32, which has been located under and spaced from the cylinder cover 13 as shown in FIG. 5(a), is raised together with the piston 14 to abut on the cylinder cover 13. Thus, the rebound rubber 33 is formed to be thinner than one for the purpose of absorbing the shock which occurs in the most expanded state (or the rebound rubber 33 in the first embodiment).

As has been described above, according to the first and second embodiments, the pushing force generated by the difference in pressure receiving area between one and the other end surfaces of the piston is canceled out by the elastic reaction force of the spring. Thus, the force compressing the cushion rubber interposed between both ends of the hydraulic shock absorber and the vehicle body and wheel sides is reduced.

Therefore, since the shock absorbing function of the cushion rubber is not impaired, the cushion rubber can effectively absorb the shock which occurs when, for example, the wheel goes over minute bumps on the road surface such as while lines. As a result, installation of the hydraulic shock absorber described in the above embodiments can improve the riding comfort of the vehicle.

The first and second coil springs described above in the second embodiment have the function, also as a rebound spring, of preventing the piston from colliding with the cylinder in the most expanded state. Thus, the hydraulic shock absorber of the second embodiment has a smaller number of constituent parts than one provided with a coil spring which functions exclusively as a rebound spring, thereby achieving cost and weight reduction.

In addition, the hydraulic shock absorber 1 described above in the first and second embodiments can balance out generally all the pushing force by the gas pressure in the high-pressure gas chamber, which can further improve the riding comfort of the vehicle.

The hydraulic shock absorber according to the present embodiments is useful for installation in vehicles such as automobiles, motorcycles, and three wheelers, and suitable especially for vehicles on which a driver rides.

## Claims

1. Hydraulic shock absorber (1) for a vehicle with fluid chambers (16,17) defined in a cylinder (2) by a piston (14) having an aperture and receiving a pushing force from a high-pressure gas chamber (18), and a cushion rubber (3,6) interposed between a vehicle body side and a wheel side of the vehicle, wherein at least one spring (31,41,42) is disposed in the cylinder (2) for urging the piston (14) in a direction that a piston rod (4) is inserted into the cylinder (2), the fluid chambers (16,17) comprises an upper fluid chamber (16) and a lower fluid chamber (17), the upper fluid chamber (16) is formed between the piston (14) and a cylinder cover (13), the lower fluid chamber (17) is formed between the piston (14) and a free piston (15), the free piston (15) is formed between the lower fluid chamber (17) and the high-pressure gas chamber (18), **characterized in that**
the spring (31,41,42) for urging the piston (14) in the direction that the piston rod (4) is received into the cylinder (2) is constructed such that its elastic reaction force under a standard vehicle height state with a passenger on board is generally equal to pushing force generated by a difference in pressure receiving area between one and the other end surfaces of the piston (14).

2. Hydraulic shock absorber (1) for a vehicle according to claim 1, **characterized in that** the spring (41,42) is made up of a first coil spring (41) located on a radially inner side and a second coil spring (42) located on a radially outer side, and the first and second coil springs (41,42) are formed to have different winding directions from each other.

3. Hydraulic shock absorber (1) for a vehicle according to claim 1 or 2, **characterized in that** an inside of a cylinder body (12) of the cylinder (2) is defined into the upper fluid chamber (16), the lower fluid chamber (17), and the high-pressure gas chamber (18) by the piston (14) and the free piston (15), wherein the piston (14) is attached to the lower end of the piston rod (4) and the free piston (15) is fitted in the vicinity of the lower end of the cylinder body (12).

4. Hydraulic shock absorber (1) for a vehicle according to one of the claims 1 to 3, **characterized by** a support pipe (24), supported by and fixed to the piston rod (4), wherein the piston rod (4) extends through the support pipe (24), and wherein the support pipe (24) holds a lower end of the spring (31,41,42).

5. Hydraulic shock absorber (1) for a vehicle according to claim 4, **characterized in that** the spring (31,41,42) is inserted in the cylinder (2) with the support pipe (24) and the piston rod (4) penetrating therethrough, wherein the compression coil spring (31) is elastically mounted between a flange (24a) of the support pipe (24) and a stopper (32) located over the support pipe (24).

6. Hydraulic shock absorber (1) for a vehicle according to claim 5, **characterized in that** a shock absorbing elastic member (33) is interposed between the stopper (32) and a cylinder cover (13).

7. Hydraulic shock absorber (1) for a vehicle according to claim 6, **characterized in that** the support pipe (24) is formed such that its length between the upper end and the flange (24a) is generally equal to or longer than a minimum length of the compression coil spring (31) at its elastic limit, with the upper end of the support pipe (24) abutting on the lower end of the projection (32a) of the stopper (32), wherein the minimum length at the elastic limit refers to a length of the compression coil spring (31) when it is contracted most without any change in its characteristics.

## Patentansprüche

1. Hydraulik-Stoßdämpfer (1) für ein Fahrzeug mit Fluid-Kammern (16, 17), die in einem Zylinder (2) durch einen Kolben (14) definiert sind, welcher eine Blende hat und eine Drück-Kraft von einer Hochdruck-Gas-Kammer (18) aufnimmt, und einen DämpfungsGummi (3, 6) zwischengesetzt zwischen einer Fahrzeugkörper-Seite und einer Rad-Seite des Fahrzeugs, wobei zumindest eine Feder (31, 41, 42) in dem Zylinder (2) positioniert ist, um den Kolben (14) in eine Richtung zu drücken, in welcher eine Kolben-Stange (4) in den Zylinder (2) eingesetzt ist, die Fluid-Kammern (16, 17) umfassen eine obere Fluid-Kammer (16) und eine untere Fluid-Kammer (17), die obere Fluid-Kammer (16) ist zwischen dem Kolben (14) und einer Zylinder-Abdeckung (13) ausgebildet, die untere Fluid-Kammer (17) ist zwischen dem Kolben (14) und einem freien Kolben (15) ausgebildet, der freie Kolben (15) ist zwischen der unteren Fluid-Kammer (14) und der Hochdruck-Gas-Kammer (18) ausgebildet,
**dadurch gekennzeichnet, dass**
die Feder (31, 41, 42) zum Drücken des Kolbens (14) in die Richtung, in welcher die Kolben-Stange (4) in dem Zylinder (2) aufgenommen ist, ist konstruiert, so dass deren Elastik-Reaktions-Kraft unter einem Standard-Fahrzeug-Höhen-Zustand, mit einem Passagier an Bord, generell gleich mit einer Drück-Kraft ist, die durch eine Differenz im Druck-Aufnahmebereich zwischen einer und der anderen Endfläche des Kolbens (14) erzeugt ist.

2. Hydraulik-Stoßdämpfer (1) für ein Fahrzeug gemäß Anspruch 1, **dadurch gekennzeichnet, dass** die Feder (41, 42) gebildet ist aus einer ersten Schraubenfeder (41), die an einer radialen Innenseite angeordnet ist, und einer zweiten Schraubenfeder (42), die an einer radialen Außenseite angeordnet ist, und die erste und zweite Schraubenfeder (41, 42) sind ausgebildet, um unterschiedliche Wicklungsrichtungen voneinander zu haben.

3. Hydraulik-Stoßdämpfer (1) für ein Fahrzeug gemäß Anspruch 1 oder 2, **dadurch gekennzeichnet, dass** ein Inneres eines Zylinder-Körpers (12) des Zylinders (2) in die obere Fluid-Kammer (16), die untere Fluid-Kammer (17) und die Hochdruck-Gas-Kammer (18) durch den Kolben (14) und den freien Kolben (15) definiert ist, wobei der Kolben (14) an dem unteren Ende der Kolben-Stange (4) angebracht ist und der freie Kolben (15) in der Nähe des unteren Endes des Zylinder-Körpers (12) eingesetzt ist.

4. Hydraulik-Stoßdämpfer (1) für ein Fahrzeug gemäß einem der Ansprüche 1 bis 3, **gekennzeichnet durch** ein Lager-Rohr (24), gelagert durch und fixiert an der Kolben-Stange (4), wobei die Kolben-Stange (4) sich durch das Lager-Rohr (24) erstreckt und wobei das Lager-Rohr (24) ein unteres Ende der Feder (31, 41, 42) hält.

5. Hydraulik-Stoßdämpfer (1) für ein Fahrzeug gemäß Anspruch 4, **dadurch gekennzeichnet, dass** die Feder (31, 41, 42) in den Zylinder (2) mit dem Lager-Rohr (24) und der Kolben-Stange (4), die durch dieses hindurchdringt, eingesetzt ist, wobei die Kompressions-Schraubenfeder (31) elastisch zwischen einem Flansch (24a), dem Lager-Rohr (24) und einem Stopper (32), angeordnet über der Lager-Rohr (24), montiert ist.

6. Hydraulik-Stoßdämpfer (1) für ein Fahrzeug gemäß Anspruch 5, **dadurch gekennzeichnet, dass** ein Stoß-Absorptions-Elastik-Element (33) zwischen dem Stopper (32) und einer Zylinder-Abdeckung (13) zwischengesetzt ist.

7. Hydraulik-Stoßdämpfer (1) für ein Fahrzeug gemäß Anspruch 6, **dadurch gekennzeichnet, dass** das Lager-Rohr (24) ausgebildet ist, so dass dessen Länge zwischen dem oberen Ende und dem Flansch (24a) generell gleich oder länger ist als eine Minimal-Länge der Kompressions-Schraubenfeder (31) an deren elastischer Grenze, mit dem oberen Ende des Lager-Rohrs (24) in Anlage an dem unteren Ende des Vorsprungs (32a) des Stoppers (32), wobei die Minimal-Länge an der elastischen Grenze sich auf eine Länge der Kompressions-Schraubenfeder (31) bezieht, wenn diese am meisten zusammengezogen ist, ohne irgendwelche Änderungen in deren Charakteristika.

## Revendications

1. Amortisseur hydraulique (1) pour un véhicule avec les chambres de fluide (16,17) définies dans un cylindre (2) par un piston (14) comportant une ouverture et recevant une force de poussée à partir d'une chambre de gaz à haute pression (18), et un caoutchouc d'amortissement (3, 6) interposé entre un côté carrosserie de véhicule et un côté de roue du véhicule, dans lequel au moins un ressort (31, 41, 42) est disposé dans le cylindre (2) pour solliciter le piston (14) dans une direction dans laquelle une tige de piston (4) est insérée dans le cylindre (2), les chambres de fluide (16, 17) comprennent une chambre de fluide supérieure (16) et une chambre de fluide inférieure (17), la chambre de fluide supérieure (16) est formé entre le piston (14) et un couvercle de cylindre (13), la chambre de fluide inférieure (17) est formée entre le piston (14) et un piston libre (15), le piston libre (15) est formé entre la chambre de fluide inférieure (17) et la chambre à gaz haute pression (18),
**caractérisé en ce que**
le ressort (31, 41, 42) pour solliciter le piston (14) dans le sens dans lequel la tige de piston (4) est reçue dans le cylindre (2) est conçu de telle sorte que sa force de réaction élastique avec une hauteur de véhicule standard avec un passager à bord est généralement égale à la force de poussée générée par une différence au niveau de la zone de réception de pression entre une surface d'extrémité et l'autre surface d'extrémité du piston (14),

2. Amortisseur hydraulique (1) pour un véhicule selon la revendication 1, **caractérisé en ce que** le ressort (41, 42) est constitué d'un premier ressort hélicoïdal (41) situé sur un côté radialement intérieur et un second ressort hélicoïdal (42) situé sur un côté radialement extérieur, et le premier ressort hélicoïdal et le second ressort hélicoïdal (41, 42) sont formés pour présenter des directions sinueuses différentes les unes des autres.

3. Amortisseur hydraulique (1) pour véhicule selon les revendications 1 ou 2, **caractérisé en ce que** l'intérieur d'un corps de cylindre (12) du cylindre (2) est défini dans la chambre de fluide supérieure (16), la chambre de fluide inférieure (17) et la chambre à gaz haute pression (18) par le piston (14) et le piston libre (15), dans lequel le piston (14) est fixé à l'extrémité inférieure de la tige de piston (4) et le piston libre (15) est monté au voisinage de l'extrémité inférieure du corps de cylindre (12).

4. Amortisseur hydraulique (1) pour véhicule selon l'une des revendications 1 à 3, **caractérisé par** un tuyau de support (24), supporté par et fixé à la tige de piston (4), dans lequel la tige de piston (4) s'étend à travers le tuyau de support (24), et dans lequel le tuyau de support (24) maintient une extrémité inférieure du ressort (31, 41, 42).

5. Amortisseur hydraulique (1) pour un véhicule selon la revendication 4, **caractérisé en ce que** le ressort (31, 41,42) est inséré dans le cylindre (2) avec le tube de support (24) et la tige de piston (4) pénétrant à travers celui-ci, dans lequel le ressort de compression hélicoïdal (31) est monté élastiquement entre une bride (24a) du tuyau de support (24) et un bouchon (32) situé sur le tube de support (24).

6. Amortisseur hydraulique (1) pour un véhicule selon la revendication 5, **caractérisé en ce qu'**est interposé un élément élastique amortisseur (33) entre le bouchon (32) et un couvercle de cylindre (13).

7. Amortisseur hydraulique (1) pour un véhicule selon la revendication 6, **caractérisé en ce qu'**on forme le tube de support (24) de telle sorte que sa longueur entre la partie supérieure et la bride (24a) est généralement égale ou supérieure à une longueur minimale du ressort hélicoïdal de compression (31) à sa limite élastique, l'extrémité supérieure du tube de support (24) s'appuyant sur l'extrémité inférieure de la saillie (32a) du bouchon (32), dans lequel la longueur minimale à la limite élastique se réfère à une longueur de ressort hélicoïdal de compression (31) lorsque celui-ci est contracté le plus sans modification caractéristique.
